(19) Europäisches Patentamt / European Patent Office / Office européen des brevets

(11) **EP 3 534 178 B1**

(12) **EUROPÄISCHE PATENTSCHRIFT**

(45) Veröffentlichungstag und Bekanntmachung des Hinweises auf die Patenterteilung:
**13.04.2022 Patentblatt 2022/15**

(21) Anmeldenummer: **19158704.7**

(22) Anmeldetag: **22.02.2019**

(51) Internationale Patentklassifikation (IPC):
**G01S 13/44** (2006.01)  **G01S 13/93** (2020.01)
**G01S 7/292** (2006.01)  **G01S 13/10** (2006.01)
**H01Q 25/02** (2006.01)  **H01Q 21/06** (2006.01)
**G01S 3/46** (2006.01)  **G01S 13/02** (2006.01)
**G01S 13/933** (2020.01)

(52) Gemeinsame Patentklassifikation (CPC):
**G01S 13/4463; G01S 3/46; G01S 7/2923;**
**G01S 13/10; G01S 13/4454; G01S 13/933;**
G01S 2013/0245; H01Q 21/061

(54) **RADARGERÄT MIT GRUPPENANTENNE UND VERFAHREN ZUR QUELLLOKALISATION DURCH EINE ZWEIDIMENSIONALE RADARGRUPPENANTENNE**

RADAR APPARATUS WITH ANTENNA ARRAY AND METHOD FOR SOURCE LOCATION USING A TWO-DIMENSIONAL ANTENNA ARRAY

APPAREIL RADAR POURVU D'ANTENNE RÉSEAU ET PROCÉDÉ DE LOCALISATION DE SOURCE AU MOYEN D'UNE ANTENNE RÉSEAU RADAR BIDIMENSIONNELLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.02.2018 DE 102018001499**

(43) Veröffentlichungstag der Anmeldung:
**04.09.2019 Patentblatt 2019/36**

(73) Patentinhaber: **MBDA Deutschland GmbH 86529 Schrobenhausen (DE)**

(72) Erfinder:
 • **Weiland, Lorenz**
 **80637 München (DE)**
 • **Utschick, Wolfgang**
 **85051 Ingolstadt (DE)**
 • **Leberer, Ralf**
 **89075 Ulm (DE)**
 • **Schwab, Wolfgang**
 **80637 München (DE)**

(74) Vertreter: **Isarpatent**
**Patent- und Rechtsanwälte Barth**
**Charles Hassa Peckmann & Partner mbB**
**Friedrichstrasse 31**
**80801 München (DE)**

(56) Entgegenhaltungen:
**US-A1- 2016 291 144**

 • **WANG GUANGMIN ET AL: "Subspace-based two-dimensional direction estimation and tracking of multiple targets", IEEE TRANSACTIONS ON AEROSPACE AND ELECTRONIC SYSTEMS, IEEE SERVICE CENTER, PISCATAWAY, NJ, US, Bd. 51, Nr. 2, 1. April 2015 (2015-04-01), Seiten 1386-1402, XP011585641, ISSN: 0018-9251, DOI: 10.1109/TAES.2014.130018 [gefunden am 2015-06-16]**
 • **CATTENOZ MATHIEU ET AL: "Extended orthogonal matching pursuit for robust and fast target localisation in multiple-input multiple-output radar", IET RADAR SONAR NAVIGATION, THE INSTITUTION OF ENGINEERING AND TECHNOLOGY, UK, Bd. 11, Nr. 11, 1. November 2017 (2017-11-01), Seiten 1709-1717, XP006063898, ISSN: 1751-8784, DOI: 10.1049/IET-RSN.2017.0008**

## Beschreibung

TECHNISCHES GEBIET DER ERFINDUNG

Die Erfindung betrifft ein Radargerät mit einer Gruppenantenne sowie ein Verfahren zur Quelllokalisation durch eine zweidimensionales Radargruppenantenne, insbesondere für den Einsatz in Luftverteidigungs- oder Flugsicherungsradargeräten.

TECHNISCHER HINTERGRUND

Radargeräte, wie beispielsweise Luftverteidigungs- oder Flugsicherungsradargeräte, nutzen häufig zweidimensional angeordnete Gruppenantennen (auch Antennenarrays), welche in einer gleichförmigen Matrix separat und individuell ansteuerbarer Einzelantennenelementen angeordnet sind. Derartige Gruppenantennen sind in der Lage eine bekannte oder unbekannte Anzahl von Quellen im Fernfeld des Radars durch über die Matrix hinweg verlaufende Laufzeitunterschiede zu lokalisieren, aufgelöst nach Azimut und Elevation ("direction-of-arrival", DOA).

Dabei werden die jeweiligen Azimut- und Elevationswerte der einzelnen Quellen im Bezug auf die Radargruppenantenne bzw. das Radarantennenarray, d.h. die Quellrichtungsvektoren, unter Verwendung eines oder mehrerer Matrixradarempfangssignale abgeschätzt. Es sind aus dem Stand der Technik verschiedene Auswertealgorithmen bekannt, die unterschiedliche Vor- und Nachteile aufweisen. Algorithmen, bei denen die Anzahl der Matrixradarempfangssignale die Anzahl der zu approximierenden Quellrichtungsvektoren übersteigt, nutzen die Identifizierung eines Satzes an orthogonalen Basisvektoren, die den Raum der Quellrichtungsvektoren so gut wie möglich aufspannen, d.h. das Residuum des Raumes der Quellrichtungsvektoren im Vergleich zum Raum der geschätzten orthogonalen Basisvektoren ist minimal. Derartige Verfahren werden auch Unterraumverfahren genannt. Die Orthogonalität zwischen dem Signalraum, d.h. dem Raum der Quellrichtungsvektoren, und dem Rauschraum führt zu einer Verbesserung des Signal-zu-Rausch-Verhältnisses, denn zusätzliches Rauschen ist üblicherweise isotrop über den gesamten Raum verteilt, so dass der durch die geschätzten orthogonalen Basisvektoren aufgespannte Raum nur einen geringen Anteil dieses Rauschens aufweist. Allerdings sind derartige Algorithmen typischerweise recht rechenaufwändig und benötigen mehrere Matrixradarempfangssignale, um entsprechende Kovarianzmatrizen zu bestimmen. Zur Verringerung der rechnerischen Komplexität können iterative Gitterschätzer eingesetzt werden, bei denen die Zielparameter auf ein zweidimensionales Gitter diskretisiert werden. Zudem können iterative Gitterschätzalgorithmen auf der Basis eines einzigen Matrixradarempfangssignals operieren. Die rechnerische Komplexität solcher iterativer Gitterschätzalgorithmen nimmt zwar mit der Gitterkonstante ab, jedoch auf Kosten der Auflösung der Quelllokalisation.

Es besteht ein Bedarf an Lösungen zur Quelllokalisation durch eine zweidimensionale Radargruppenantenne, welche sich durch eine geringe rechnerische Komplexität auszeichnen, gleichzeitig jedoch eine lokale Erhöhung der Auflösung bei nur asymptotischer Erhöhung der Komplexität ermöglichen.

Die Druckschriften CN 103 064 071 A und CN 104 182 753 A offenbaren verschiedene Quelllokalisationsalgorithmen auf der Basis von Radargeräten mit synthetischer Apertur und Maximum-Likelihood-Schätzern.

Das Dokument XP6063898, Cattenoz, M., Savy, L., Marcos, S.: "Extended orthogonal matching pursuit for robust and fast target localisation in multiple-input multiple-output radar", IET Radar, Sonar & Navigation, Vol. 11(11) 2017, p. 1709 ff. offenbart eine Erweiterung eines Greedy-Algorithmus für diskretisierte Zielparameterauftragungen, bei dem nach jedem Detektionsschritt für ein Quellmaximum an einem Zielparameterknoten eine lokale Taylorreihenentwicklung zweiter Ordnung zur Quelllokalisation auf subzellulärer Basis berücksichtigt wird, um einen um den Zielparameterknoten erweiterten Bereich in einem Subtraktionsschritt des detektierten Quellmaximums ausschließen zu können.

Das Dokument XP11585641, Wang Guangmin et al.: "Subspace-based two-dimensional direction estimation and tracking of multiple targets", IEEE Transactions on Aerospace and Electronic Systems, 51(2), April 1, 2015, p. 1386 ff. offenbart eine zweidimensionale DOA-Schätzung basierend auf Kreuzkorrelationen automatischer Paar bildender Verfahren für nicht-kohärente Schmalbandsignale.

ZUSAMMENFASSUNG DER ERFINDUNG

Eine der Aufgaben der Erfindung besteht darin, Lösungen für die Quelllokalisation in Radarempfangssignalen einer Radargruppenantenne zu finden, welche eine hohe Auflösung bei gleichzeitig geringer rechnerischer Komplexität gewährleisten können.

Diese und andere Aufgaben werden durch ein Verfahren zur Quelllokalisation durch eine zweidimensionale Radargruppenantenne mit den Merkmalen des Anspruchs 1 und ein Radargerät mit den Merkmalen des Anspruchs 8 gelöst.

Gemäß einem ersten Aspekt der Erfindung umfasst ein Verfahren zur Quelllokalisation durch eine zweidimensionale Radargruppenantenne, insbesondere für den Einsatz in Luftverteidigungs- oder Flugsicherungsradargeräten, die Schritte des Empfangens eines Einzelpulsempfangssignals von der Radargruppenantenne, des Diskretisierens des empfangenen Einzelpulsempfangssignals auf einem zweidimensionalen Zielparametergitter, wobei Azimutwinkel und Elevationswinkel auf dem zweidimensionalen Zielparametergitter diskret aufgetragen werden, des Initialisierens eines Residuumsignals mit dem empfangenen Einzelpulsempfangssignals, des Bestimmens eines lokalen Signalmaximums des Residuumsignals, des Approximierens eines geschätzte Zielparameter angebenden Zielparametergitterknotens, welches dem bestimmten lokalen Signalmaximum am nächsten liegt, des Durchführens eines Monopuls-Schätzalgorithmus in der lokalen Umgebung um den approximierten Zielparametergitterknoten zum Erhalt verfeinerter geschätzter Zielparameter einer ersten Quelle, und des Berechnens eines aktualisierten Residuumsignals durch eine orthogonale Projektion des empfangenen Einzelpulsempfangssignals auf den durch die übrigen Quellen außer der ersten Quelle aufgespannten Residualraum.

Die Schritte des Bestimmens, Approximierens, Durchführens des Monopuls-Schätzalgorithmus und Berechnens werden zum Erhalt verfeinerter geschätzter Zielparameter einer zweiten (und in Folge gegebenenfalls weiterer Quellen) iteriert.

Gemäß einem zweiten Aspekt der Erfindung umfasst ein Radargerät eine zweidimensionalen Radargruppenantenne, welche eine Vielzahl von in einer gleichförmigen Matrix angeordneten Einzelantennen aufweist, und einer Radarsignalverarbeitungseinrichtung, welche mit der zweidimensionalen Radargruppenantenne gekoppelt ist. Die Radarsignalverarbeitungseinrichtung ist dazu ausgelegt ist, zur Quelllokalisation von Radarquellen das Verfahren gemäß dem ersten Aspekt der Erfindung durchzuführen.

Eine wesentliche Idee der Erfindung besteht darin, einen lokal begrenzten Monopuls-Schätzalgorithmus in einer Verfeinerungsregion um in einem OMP-Verfahren ("orthogonal matching pursuit") aufgefundenen Schätzwert für Zielparameter anzuwenden, um die Genauigkeit der Zwischenergebnisse des OMP-Verfahrens zu verbessern.

Ein besonderer Vorteil in den erfindungsgemäßen Lösungen besteht darin, dass die Zielparametergitter für das OMP-Verfahren grob gewählt werden können und die rechnerische asymptotische Komplexität des Monopuls-Schätzalgorithmus durch die Begrenzung auf eine lokale Umgebung um aufgefundenen Schätzwert die rechnerische asymptotische Komplexität des OMP-Verfahrens nicht übersteigt. Dadurch kann das vorgeschlagene Verfahren die Genauigkeit der Quelllokalisation verbessern, ohne signifikante Einbußen in der Rechengeschwindigkeit zu erleiden. Damit kann eine Quelllokalisation in Radargeräten in Echtzeit mit höherer Auflösung erfolgen.

Vorteilhafte Ausgestaltungen und Weiterbildungen ergeben sich aus den weiteren Unteransprüchen sowie aus der Beschreibung unter Bezugnahme auf die Figuren.

Gemäß einigen Ausführungsformen des erfindungsgemäßen Verfahrens kann das Aktualisieren des Residuumsignals das lokale Signalmaximum an der Position der geschätzten Zielparameter berücksichtigen. In alternativen Ausführungsformen des erfindungsgemäßen Verfahrens kann das Aktualisieren des Residuumsignals das lokale Signalmaximum an der Position der verfeinerten geschätzten Zielparameter berücksichtigen.

Gemäß einigen weiteren Ausführungsformen des erfindungsgemäßen Verfahrens kann der Monopuls-Schätzalgorithmus einen Amplitudenvergleich von Differenzkanälen oder eine phaseninterferometrisches Verfahren umfassen.

Gemäß einigen weiteren Ausführungsformen des erfindungsgemäßen Verfahrens kann das Zielparametergitter ein mindestens einfach überabgetastetes, insbesondere ein einfach überabgetastetes diskret fourier-transformiertes Gitter sein.

Gemäß einigen weiteren Ausführungsformen des erfindungsgemäßen Verfahrens können die geschätzten Zielparameter Azimut und Elevation umfassen. Dabei kann die Radargruppenantenne eine Vielzahl von in einer gleichförmigen Matrix angeordneten Einzelantennen aufweisen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

KURZE INHALTSANGABE DER FIGUREN

Die vorliegende Erfindung wird nachfolgend anhand der in den schematischen Figuren angegebenen Ausführungsbeispiele näher erläutert. Es zeigen dabei:

Fig. 1 ein schematisches Blockschaubild eines Radargerätes gemäß einer Ausführungsform der Erfindung;

Fig. 2 ein Flussdiagramm eines Verfahrens zur Quelllokalisation durch eine zweidimensionale Radargruppenantenne gemäß einer weiteren Ausführungsform der Erfindung; und

Fig. 3 beispielhafte Illustrationen diskretisierter Zielparametergitter, welche einen Schritt des dem Verfahren der Fig. 2 zugrunde liegenden Algorithmus veranschaulichen.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

BESCHREIBUNG VON AUSFÜHRUNGSBEISPIELEN

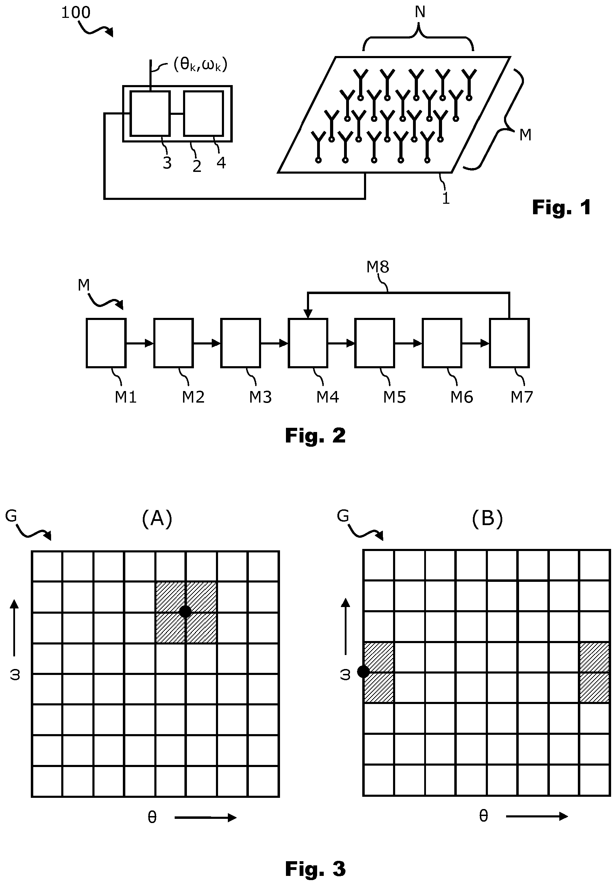

Fig. 1 zeigt ein schematisches Blockschaubild eines Radargerätes 100, welches beispielsweise zur Luftverteidigung oder Flugsicherung eingesetzt werden kann. Es sollte dabei klar sein, dass das Radargerät 100 auch für andere Zwecke eingesetzt werden kann.

Das Radargerät 100 umfasst eine zweidimensionale Gruppenantenne 1 (bzw. Antennenarray 1), welche eine Vielzahl von in einer gleichförmigen Matrix angeordneten Einzelantennen aufweist (ein sogenanntes "uniform rectangular array", URA). Die Einzelantennen können zur Abstrahlung von elektromagnetischen Feldern konfiguriert sein, so dass sich durch konstruktive Interferenz aller abgestrahlten Felder ein gemeinsames Antennendiagramm der Gruppenantenne 1 ergibt. Die Einzelantennen können prinzipiell in jeder geeigneten Bauweise bzw. mit jeder gewünschten Abstrahlcharakteristik implementiert werden, wie etwa Yagi-Uda-Antennen oder Hornstrahler. Durch die zweidimensionale Anordnung der Einzelantennen ist eine senkrecht zur Gruppenantennenebene stehende Abstrahlrichtung definiert, so dass eine phasenrichtige Speisung der Einzelantennen untereinander erfolgt.

Das Radargerät 100 wird von einem Radarsteuergerät 2 gesteuert, welches prinzipiell eine Radarsignalverarbeitungseinrichtung 3 aufweist. Das Radarsteuergerät 2 kann weiterhin einen mit der Radarsignalverarbeitungseinrichtung 3 gekoppelten Konfigurationsdatenspeicher 4 aufweisen. Die Radarsignalverarbeitungseinrichtung 3 dient der Ansteuerung der Gruppenantenne 1 und kann insbesondere die Gruppenantenne 1 zum Aussenden und Empfangen von Radarsignalen bzw. Radarechosignalen veranlassen. Weitere Komponenten des Radargerätes 100 - wie etwa Filter, Sende- /Empfangsumschalter, Modulatoren, Taktgeber, Phasenschieber, Anzeigeeinrichtungen und ähnliche für Radargeräte übliche Funktionskomponenten - sind aus Gründen der Übersichtlichkeit in Fig. 1 nicht explizit dargestellt. Die in Fig. 1 dargestellten Komponenten des Radargerätes 100 sind nur beispielhafter Natur und weitere Komponenten können im Zusammenhang mit dem Radargerät 100 implementiert werden.

Die Radarsignalverarbeitungseinrichtung 3 kann dazu ausgelegt sein, Einzelpulsempfangssignale von der Gruppenantenne 1 nach den Einzelantennen aufgelöst zu empfangen und aus den Einzelpulsempfangssignalen jeweils nach Azimutwinkel $\theta$ und Elevationswinkel $\omega$ aufgelöste 2-Tupel $(\theta_k, \omega_k)$ für Richtungsinformationen einer k-ten von k = 1, ..., K Quellen im Fernfeld der Gruppenantenne 1 auszugeben. Bei einer Anzahl von N x M Einzelantennen in der Gruppenantenne 1 können die Einzelpulsempfangssignale y jeweils als komplexwertige Matrix der Ordnung N x M dargestellt werden.

Ein Einzelpulsempfangssignal $y \in \mathbb{C}^{NM}$ kann als Linearkombination aller mit dem jeweiligen Quellsignalvektor $q(\theta_k, \omega_k)$ gewichteten Kroneckerprodukte aus der auf die Gruppenantennenmannigfaltigkeit abgebildeten Azimutwinkelmatrix $a(\theta_k)$ und der auf die Gruppenantennenmannigfaltigkeit abgebildeten Elevationswinkelmatrix $b(\omega_k)$ über alle K Quellsignale dargestellt werden. Dabei kann zusätzliches signalunabhängiges Rauschen n als additiver Term zu der Linearkombination berücksichtigt werden.

Unter der Annahme eines statistischen Modells für den signalunabhängigen Rauschanteil n kann die Radarsignalverarbeitungseinrichtung 3 die 2-Tupel $(\theta_k, \omega_k)$ aller k =1, ..., K Quellen schätzen. Dazu wird ein iteratives Optimierungsverfahren für dünnbesetzte Signalmatrizen ("sparse approximation") auf einem diskretisierten Zielparametergitter G eingesetzt. Azimutwinkel $\theta$ und Elevationswinkel $\omega$ werden dabei auf einem zweidimensionalen Zielparametergitter G diskret aufgetragen. Das Einzelpulsempfangssignal y wird dann über das Zielparametergitter G hinweg nach lokalen Signalmaxima abgesucht. Für je ein Signalmaximum wird dann ein Zielparametergitterknoten als Treffer festgelegt, d.h. eine Quelle k wird auf das durch den jeweiligen Zielparametergitterknoten definierte geschätzte 2-Tupel $(\theta_k^G, \omega_k^G)$ approximiert. Der Einfluss der auf diese Weise geschätzt lokalisierten Quelle k wird durch eine orthogonale Projektion des Einzelpulsempfangssignal y auf den durch die übrigen K-1 Quellen aufgespannten Residualraum (annähernd) eliminiert. Für die entsprechende orthogonale Projektion des Einzelpulsempfangssignal y wird wiederum ein lokales Signalmaximum der nächsten Quelle k' gesucht und das Approximationsverfahren solange iteriert, bis für alle K Quellen geschätzte 2-Tupel $(\theta^G, \omega^G)$ gefunden worden sind. Ein derartiges Verfahren wird auch "orthogonal matching pursuit" (OMP) genannt.

Die rechnerische Komplexität und damit auch die Geschwindigkeit und das Ressourcenbedürfnis solcher OMP-Verfahren hängt maßgeblich mit der Auflösung des gewählten Zielparametergitters G zusammen: Wenn die Auflösung grob gewählt wird, sinkt die Komplexität und die Geschwindigkeit des OMP-Verfahrens steigt. Dies geht allerdings zu Lasten der Genauigkeit in der Quelllokalisation, da die lokalen Abweichungen der tatsächlichen Azimut- und Elevationswinkelwerte vom nächstliegenden Zielparametergitterknoten statistisch gesehen größer werden. Wenn andererseits die Auflösung sehr fein gewählt wird, kann zwar die Genauigkeit in der Quelllokalisation erhöht werden, aber die rechnerische Komplexität erhöht sich stark.

Bekannte Ansätze aus dem Stand der Technik zur Verfeinerung eines OMP-Verfahrens - wie beispielsweise in Cattenoz, M., Savy, L., Marcos, S.: "Extended orthogonal matching pursuit for robust and fast target localisation in multiple-input multiple-output radar", IET Radar, Sonar & Navigation, Vol. 11(11) 2017, p. 1709 ff. offenbart - nutzen eine initial feine Auflösung des Zielparametergitters, welches durch eine Taylorreihenentwicklung um detektierte Signalmaxima lokal vergröbert wird, um ein OMP-Verfahren robuster zu machen. Dabei wird nicht nur der Einfluss eines detektierten Signalmaximums an der geschätzten Position des feinen Zielparametergitters für weitere Iterationsschritte eliminiert, sondern auch durch potentielle Abweichungen der geschätzten von der tatsächlichen Position entstehende Einflüsse an benachbarten Knoten. Kurz gesagt wird in Cattenoz, M. et al. ein feines Zielparametergitter als Ausgangsbasis für das OMP-Verfahren gewählt, was an geschätzten Positionen detektierten Signalmaxima lokal vergröbert wird. Dies erhöht die Verlässlichkeit des OMP-Verfahrens, geht allerdings zu Lasten dessen Auflösung.

Der in der Implementierung der Radarsignalverarbeitungseinrichtung 3 - und dem nachfolgend beschriebenen Verfahren der Fig. 2 und 3 - verfolgte Ansatz unterscheidet sich demgegenüber darin, dass das Zielparametergitter G initial grob gewählt wird. Die geschätzten Positionen detektierter Signalmaxima können dann zwar mit geringer rechnerischer Komplexität und rasch aufgefunden werden, sind aber mit einer potentiell höheren Ungenauigkeit und Verlässlichkeit behaftet. Die Radarsignalverarbeitungseinrichtung 3 ist nun dazu ausgelegt, die bei der Suche über das Zielparametergitter G hinweg aufgefundenen lokalen Signalmaxima in deren durch die geschätzten 2-Tupel $(\theta_k^G, \omega_k^G)$ approximierten Zielparametergitterknoten lokal in ihrer Auflösung zu verfeinern. Hierfür wendet die Radarsignalverarbeitungseinrichtung 3 einen Monopuls-Schätzalgorithmus in der lokalen Umgebung um den approximierten Zielparametergitterknoten herum an.

Monopuls-Schätzalgorithmen sind klassische Radarschätztechniken, bei denen eine höhere Auflösung als die Bandbreite eines Einzelpulses erreicht werden kann, indem Differenzkanäle um den Summenkanal herum gebildet werden. Für Monopuls-Schätzer werden Einzelantennen von Antennengruppen nicht nur summenbildend zusammengeschaltet, sondern auch differenzbildend. Für verschiedenste Zwecke können unterschiedliche Summen und Differenzen gebildet werden. Deshalb kann durch Amplitudenvergleich des Summenkanals und der verschiedenen Differenzkanäle eine Quelllokalisation verfeinert werden. Durch eine gegenphasige Kopplung zweier um die Position eines Summenkanals herum benachbarter Antennengruppen wird ein Differenzkanal gebildet. Die genaue Position eines Zielparameters wird nun dadurch bestimmt, dass ein Maximum des Summenkanals mit einem Minimum im Differenzkanal zusammenfallen muss. Das Residuum des Differenzsignals ist somit ein Maß für die Abweichung vom Maximum des Summenkanals. Für zweidimensionale Radargruppenantennen kann eine entsprechende Monopuls-Schätzung sowohl in Azimut als auch in Elevation durchgeführt werden.

Da der Summenkanal und die Differenzkanäle ebenfalls aus einem von der Gruppenantenne empfangenen Einzelpulsempfangssignal gebildet werden können, kann ein Monopuls-Schätzer in ein OMP-Verfahren integriert werden. Monopuls-Schätzalgorithmen als auf Unterräumen und nicht auf Zielgittern basierte Schätzer unterliegen jedoch prinzipbedingt einer hohen Komplexität. Wenn ein Monopuls-Schätzalgorithmus allerdings auf die lokale Umgebung um den approximierten Zielparametergitterknoten beschränkt bleibt, sinkt die benötigte Rechenleistung signifikant.

Die Radarsignalverarbeitungseinrichtung 3 ist daher dazu ausgelegt, den für je ein Signalmaximum als Treffer festgelegten Zielparametergitterknoten in seiner lokalen Umgebung einem Monopuls-Schätzverfahren zu unterwerfen, d.h. einer lokal begrenzten Verfeinerungsregion um den als Treffer festgelegten Zielparametergitterknoten zu bilden, in der das Monopuls-Schätzverfahren durchgeführt wird. Eine Möglichkeit für die Darstellung des Zielparametergitters G bieten DFT-Zielparametergitter, beispielsweise q-fach überabgetastete DFT-Zielparametergitter mit N x M Gitterpunkten. In derartigen DFT-Zielparametergittern kann dann beispielsweise eine Verfeinerungsregion von $[-(qN)^{-1}, (qN)^{-1}] \times [-(qM)^{-1}, (qM)^{-1}]$ um den Zielparametergitterknoten angenommen werden, in der das Monopuls-Schätzverfahren durchgeführt wird.

Wie beispielsweise in den in den Sinus-/Kosinusraum transformierten Zielparametergittern G der Fig. 3 beispielhaft dargestellt können N = M = 4 betragen, so dass sich für einen beispielhaft approximierten Zielparameterknoten bei (0,25 , 0,5) eine Verfeinerungsregion von [-1/4 ,1/4) x [-1/4 ,1/4) ergibt. Dies ist in Szenario (A) der Fig. 3 illustriert. Bei dem Szenario (B) der Fig. 3 liegt der approximierte Zielparameterknoten am Gitterrand bei (-1, 0). Hier überträgt sich die Verfeinerungsregion über den Gitterrand des Azimuts hinaus auf den jeweiligen gegenüberliegenden Gitterrand. Ganz allgemein kann eine Verfeinerungsregion azimut- und elevationsaufgelöst auch in beliebigen anderen Zielparametergittern G gebildet werden.

Die Monopuls-Schätzer nutzen Residuen der Differenzkanäle je zweier Hälften der jeweils festgelegten Verfeinerungsregionen im Verhältnis zur Stärke des Summenkanals über die jeweilige gesamte Verfeinerungsregion, um die geschätzten 2-Tupel $(\theta_k^G, \omega_k^G)$ innerhalb der Verfeinerungsregion genauer zu bestimmen und so verfeinerte 2-Tupel $(\theta_k^{G+}, \omega_k^{G+})$ zu erhalten. Für den Monopuls-Schätzalgorithmus werden invertierte Werte der Referenzresiduen genau im Zielparametergitterknoten, d.h. in der Mitte der jeweiligen Verfeinerungsregion benötigt. Die Radarsignalverarbeitungseinrichtung 3 wertet die Referenzresiduen im Zielparametergitterknoten aus und speichert sie in einem Nachschlagetabelle zwischen. Eine solche Nachschlagetabelle ("look-up table", LUT) kann beispielsweise in dem Konfigurationsdatenspeicher 4 angelegt werden. Alternativ dazu kann es auch vorgesehen werden, dass die Radarsignalverarbeitungseinrichtung 3 nur linear approximiert, so dass keine invertierten Werte der Referenzresiduen benötigt werden und damit auch die Nachschlagetabelle entfallen kann.

Bei der Eliminierung des Einflusses der geschätzt lokalisierten Quelle k kann die Radarsignalverarbeitungseinrichtung 3 eine orthogonale Projektion des Einzelempfangssignal y auf den durch die übrigen K-1 Quellen aufgespannten Residualraum vornehmen. Dazu kann der eliminierte Anteil entweder die im Monopuls-Schätzverfahren verfeinerte Position $(\theta_k^{Gf}, \omega_k^{Gf})$ oder die bereits im groben Detektionsschritt approximierte Position $(\theta_k^G, \omega_k^G)$ sein. Im ersteren Fall wird die Genauigkeit der orthogonalen Projektion zu Lasten der Rechenkomplexität verbessert. Im letzteren Fall hingegen kann die Robustheit des OMP-Verfahren verbessert werden, gerade im Falle von niedrigen Signal-zu-Rausch-Verhältnissen ("signal-to-noise ratio", SNR). Allerdings kann dabei in letzterem Fall die die Genauigkeit der orthogonalen Projektion gegenüber einem klassischen OMP-Verfahren nicht erhöht werden.

Die zur Verfeinerung der Ergebnisse des OMP-Verfahrens in der Radarsignalverarbeitungseinrichtung 3 eingesetzten Monopuls-Schätzer weisen lediglich asymptotische Komplexität pro Iteration auf, so dass die lineare Komplexität des eingesetzten Monopuls-Schätzers durch die Komplexität des restlichen OMP-Verfahrens dominiert bleibt. Damit ist die asymptotische Komplexität des verfeinerten OMP-Verfahrens nicht schlechter als die eines herkömmlichen OMP-Verfahrens.

Die verfeinerten 2-Tupel $(\theta_k^{Gf}, \omega_k^{Gf})$ werden durch die Radarsignalverarbeitungseinrichtung 3 dann als Ergebnis $(\theta_k, \omega_k)$ der Quelllokalisation für alle Quellen k = 1, ... K ausgegeben.

Fig. 2 zeigt ein Flussdiagramm eines Verfahrens M zur Quelllokalisation durch ein Radargerät mit einer zweidimensionalen Radargruppenantenne, beispielsweise durch das in Fig. 1 beispielhaft dargestellte Radargerät 100. Das Verfahren M greift dabei auf Algorithmen zurück, deren Funktionsweise im Zusammenhang mit Fig. 3 veranschaulicht wird. Fig. 3 zeigt dabei beispielhafte Illustrationen diskretisierter Zielparametergitter G, welche einen Schritt des dem Verfahren M der Fig. 2 zugrunde liegenden Algorithmus veranschaulichen.

Eine Radarsignalverarbeitungseinrichtung, wie beispielsweise die Radarsignalverarbeitungseinrichtung 3, kann in einem ersten Schritt M1 ein Einzelpulsempfangssignal y von einer Radargruppenantenne, wie beispielsweise der Radargruppenantenne 1 in Fig. 1, empfangen. Das Einzelpulsempfangssignal $y \in \mathbb{C}^{NM}$ ist dabei, unter der Annahme von k = 1, ..., K Quellen, eine Linearkombination aller mit dem jeweiligen Quellsignalvektor $q(\theta_k, \omega_k)$ gewichteten Kroneckerprodukte aus der auf die Gruppenantennenmannigfaltigkeit abgebildeten Azimutwinkelmatrix $a(\theta_k)$ und der auf die Gruppenantennenmannigfaltigkeit abgebildeten Elevationswinkelmatrix $b(\omega_k)$ über alle K Quellsignale.

In einem zweiten Schritt M2 wird das empfangene Einzelpulsempfangssignal y auf einem Zielparametergitter G diskretisiert, so dass die jeweiligen Zielparametergitterknoten diskretisierte Azimutwinkel $\theta^G$ und Elevationswinkel $\omega^G$ abbilden. Die Diskretisierungsmatrix B kann dabei aus den Kroneckerprodukten der auf das Zielparametergitter G abgebildeten Azimutwinkelmatrix $a(\theta^G)$ und der auf das Zielparametergitter G abgebildeten Elevationswinkelmatrix $b(\omega^G)$ bestehen.

Zur Untersuchung des Einzelpulsempfangssignal y auf Quellrichtungen der K Quellen wird nun zunächst in einem Schritt M3 ein Residuumsignal r mit dem vollständigen (d.h. alle K Quellsignale repräsentierenden) Einzelpulsempfangssignal y initialisiert. Der erste Schritt M4 eines zu iterierenden OMP-Algorithmus besteht dann in einem Bestimmen eines lokalen Signalmaximums des Residuumsignals r, welches einer ersten Quelle k = 1 zugeordnet werden kann. Dieses lokale Signalmaximum liegt statistisch gesehen nicht genau auf einem der Gitterknoten des Zielparametergitters G, so dass in einem zweiten Schritt M5 des OMP-Algorithmus ein Zielparametergitterknoten approximiert wird, welcher dem bestimmten lokalen Signalmaximum am nächsten liegt. Die Azimutwinkel- und Elevationswinkelwerte an diesem approximierten Zielparametergitterknoten stellen damit eine erste Schätzung $(\theta_k^G, \omega_k^G)$ für die Zielparameter dar.

Für diese erste Schätzung kann das Zielparametergitter G zunächst grob gewählt werden, um die rechnerische Komplexität der Signalmaximumsbestimmung gering zu halten. Dementsprechend ist auch die erste Schätzung $(\theta_k^G, \omega_k^G)$ für die Zielparameter nur eine sehr grobe Schätzung. In der lokalen Umgebung um den approximierten Zielparametergitterknoten kann nun in einem Schritt M6 ein Monopuls-Schätzalgorithmus durchgeführt werden. Zwei Beispiele für die lokale Umgebung von approximierten Zielparametergitterknoten auf einem zweidimensionalen Zielparametergitter G sind in Fig. 3 angegeben. Um den approximierten Zielparametergitterknoten eine (in Fig. 3 schraffiert dargestellte) Verfeinerungsregion gewählt. Wenn das Zielparametergitter G beispielsweise ein q-fach überabgetastetes diskret fourier-transformiertes Gitter (DFT-Gitter) ist, kann die Verfeinerungsregion $[-(qN)^{-1}, (qN)^{-1}] \times [-(qM)^{-1}, (qM)^{-1}]$ betragen.

Nach der Durchführung eines (lokalen) Monopuls-Schätzalgorithmus können verfeinerte geschätzte Zielparameter $(\theta_k^{G+}, \omega_k^{G+})$ erhalten werden, die nicht auf Knotenpunkten des Zielparametergitters G liegen bzw. liegen müssen, sondern die tatsächlichen Azimutwinkel- und Elevationswinkelwerte der Quelle k besser approximieren können.

Wie bei einem herkömmlichen OMP-Algorithmus erfolgt dann in Schritt M7 ein Aktualisieren des Residuumsignals r, in dem der gefundene Quellsignalanteil der Quelle k aus dem Residuumsignal r eliminiert wird. Dies erfolgt mittels einer orthogonalen Projektion des Residuumsignals auf den Residualraum des um das lokale Signalmaximum bereinigten Residuumsignals. In Schritt M7 besteht nun einerseits die Möglichkeit, das lokale Signalmaximum an der Position der geschätzten Zielparameter $(\theta_k^G, \omega_k^G)$ zu berücksichtigen. Dadurch wird die Robustheit der Quelllokalisation insbesondere bei niedrigem Signal-zu-Rausch-Verhältnis erhöht. Die Genauigkeit der Quelllokalisation wird aber nur in geringem Maße verbessert, da beim Aktualisieren M7 des Residuumsignals r nur auf ungenaue Werte der geschätzten Zielparameter $(\theta_k^G, \omega_k^G)$ zurückgegriffen wird. Alternativ dazu kann in Schritt M7 das lokale Signalmaximum an der Position der verfeinerten geschätzten Zielparameter $(\theta_k^{G+}, \omega_k^{G+})$ berücksichtigt werden. Dies ist besonders bei gutem Signal-zu-Rausch-Verhältnis vorteilhaft, da die Genauigkeit der Quelllokalisation signifikant verbessert werden kann.

In Schritt M8 werden dann die Schritte M4, M5, M6 und M7 auf der Basis des bereinigten Residuumsignal wiederholt, solange bei alle der K Quellen aufgefunden worden sind. Die Radarsignalverarbeitungseinrichtung 3 kann dann alle der verfeinerten geschätzten Zielparameter $(\theta_k^{G+}, \omega_k^{G+})$ für alle k = 1, ..., K Quellen ausgeben.

Je nach eingesetztem Monopuls-Schätzalgorithmus kann es notwendig werden, Monopuls-Verhältnisse der Referenzkanäle zu invertieren. Zu diesem Zweck kann die Radarsignalverarbeitungseinrichtung 3 in dem Radargerät 2 vorab invertierte Monopuls-Verhältnisse in Nachschlagetabellen ("look-up tables", LUT) in einem Konfigurationsdatenspeicher 4 zwischenzuspeichern. Auf eine derartige Invertierung kann unter Umständen verzichtet werden, beispielsweise wenn die Monopuls-Verhältnisse der Referenzkanäle linear approximiert werden. Monopuls-Schätzalgorithmen können beispielsweise einen Amplitudenvergleich von Differenzkanälen oder phaseninterferometrische Verfahren umfassen.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

**Patentansprüche**

1. Verfahren (M) zur Quelllokalisation durch eine Radargruppenantenne (1), mit folgenden Verfahrensschritten:

Empfangen (M1) eines Einzelpulsempfangssignals von der Radargruppenantenne (1); und Diskretisieren (M2) des empfangenen Einzelpulsempfangssignals auf einem zweidimensionalen Zielparametergitter (G), wobei Azimutwinkel $(\theta)$ und

Elevationswinkel $(\omega)$ auf dem zweidimensionalen Zielparametergitter (G) diskret aufgetragen werden;

**gekennzeichnet durch** die weiteren Verfahrensschritte:

Initialisieren (M3) eines Residuumsignals mit dem empfangenen Einzelpulsempfangssignals;
Bestimmen (M4) eines lokalen Signalmaximums des Residuumsignals; Approximieren (M5) eines geschätzte Zielparameter angebenden Zielparametergitterknotens, welches dem bestimmten lokalen Signalmaximum am nächsten liegt;
Durchführen (M6) eines Monopuls-Schätzalgorithmus in der lokalen Umgebung um den approximierten Zielparametergitterknoten zum Erhalt verfeinerter geschätzter Zielparameter einer ersten Quelle;
Berechnen (M7) eines aktualisierten Residuumsignals durch eine orthogonale Projektion des empfangenen Einzelpulsempfangssignals auf den durch die übrigen Quellen außer der ersten Quelle aufgespannten Residualraum; und
Wiederholen (M8) der Schritte des Bestimmens (M4), Approximierens (M5), Durchführens (M6) des Monopuls-Schätzalgorithmus und Berechnens (M7) zum Erhalt verfeinerter geschätzter Zielparameter einer zweiten Quelle.

2. Verfahren (M) gemäß Anspruch 1, wobei das Berechnen (M7) des aktualisierten Residuumsignals das lokale Signalmaximum an der Position der geschätzten Zielparameter berücksichtigt.

3. Verfahren (M) gemäß Anspruch 1, wobei das Berechnen (M7) des aktualisierten Residuumsignals das lokale Signalmaximum an der Position der verfeinerten geschätzten Zielparameter berücksichtigt.

4. Verfahren (M) gemäß einem der Ansprüche 1 bis 3, wobei der Monopuls-Schätzalgorithmus einen Amplitudenvergleich von Differenzkanälen oder ein phaseninterferometrisches Verfahren umfasst.

5. Verfahren (M) gemäß einem der Ansprüche 1 bis 4, wobei das Zielparametergitter (G) ein einfach oder mehrfach überabgetastetes diskret fourier-transformiertes Gitter ist.

6. Verfahren (M) gemäß einem der Ansprüche 1 bis 5, wobei die geschätzten Zielparameter Azimut und Elevation umfassen.

7. Verfahren (M) gemäß einem der Ansprüche 1 bis 6, wobei die Radargruppenantenne (1) eine Vielzahl von in einer gleichförmigen Matrix angeordneten Einzelantennen aufweist.

8. Radargerät (100), mit:

einer zweidimensionalen Radargruppenantenne (1), welche eine Vielzahl von in einer gleichförmigen Matrix angeordneten Einzelantennen aufweist; und
einer Radarsignalverarbeitungseinrichtung (3), welche mit der zweidimensionalen Radargruppenantenne (1) gekoppelt ist und dazu ausgelegt ist, zur Quelllokalisation von Radarquellen das Verfahren gemäß einem der Ansprüche 1 bis 7 durchzuführen.

**Claims**

1. Method (M) for source location using a radar antenna array (1), having the following method steps:

receiving (M1) a single-pulse reception signal from the radar antenna array (1); and
discretising (M2) the received single-pulse reception signal on a two-dimensional target parameter grid (G), the azimuth angle ($\theta$) and elevation angle ($\omega$) being plotted discretely on the two-dimensional target parameter grid (G) ;
**characterised by** the further method steps of:

initialising (M3) a residual signal with the received single-pulse reception signal;
determining (M4) a local signal maximum of the residual signal;
approximating (M5) a target parameter grid node, specifying estimated target parameters, which is closest to the determined local signal maximum;
performing (M6) a monopulse estimation algorithm in the local vicinity around the approximated target parameter grid node to obtain refined estimated target parameters of a first source;
calculating (M7) an updated residual signal by way of an orthogonal projection of the received single-pulse reception signal onto the residual space spanned by the remaining sources other than the first source; and
repeating (M8) the steps of determining (M4), approximating (M5), performing (M6) the monopulse estimation algorithm and calculating (M7) to obtain refined estimated target parameters of a second source.

2. Method (M) according to claim 1, wherein the calculation (M7) of the updated residual signal takes into account the local signal maximum at the position of the estimated target parameter.

3. Method (M) according to claim 1, wherein the calculation (M7) of the updated residual signal takes into account the local signal maximum at the position of the refined estimated target parameter.

4. Method (M) according to any of claims 1 to 3, wherein the monopulse estimation algorithm includes an amplitude comparison of difference channels or a phase-interferometry method.

5. Method (M) according to any of claims 1 to 4, wherein the target parameter grid (G) is a singly or multiply oversampled discretely Fourier-transformed grid.

6. Method (M) according to any of claims 1 to 5, wherein the estimated target parameters include azimuth and elevation.

7. Method (M) according to any of claims 1 to 6, wherein the radar antenna array (1) has a plurality of individual antennae arranged in a uniform matrix.

8. Radar apparatus (100), comprising:

a two-dimensional radar antenna array (1) which has a plurality of individual antennae arranged in a uniform matrix; and
a radar signal processing device (3), which is coupled to the two-dimensional radar antenna array (1) and configured to carry out the method according to any of claims 1 to 7 to locate radar sources.

## Revendications

1. Procédé (M) de localisation de sources par une antenne réseau radar (1), comprenant les étapes suivantes :

   réception (M1) d'un signal de réception à impulsion unique par l'antenne réseau radar (1) ; et
   discrétisation (M2) du signal de réception à impulsion unique reçu sur un réseau bidimensionnel de paramètres cibles (G), l'angle d'azimut ($\theta$) et l'angle d'élévation ($\omega$) étant appliqués de manière discrète sur le réseau bidimensionnel de paramètres cibles (G) ;
   **caractérisé par** les autres étapes de procédé :

   initialisation (M3) d'un signal résiduel avec le signal de réception à impulsion unique reçu ;
   détermination (M4) d'un maximum de signal local du signal résiduel ;
   approximation (M5) d'un nœud de réseau de paramètres cibles indiquant des paramètres cibles estimés, qui est le plus proche du maximum de signal local déterminé ;
   exécution (M6) d'un algorithme d'estimation monopulse dans l'environnement local autour du nœud de réseau de paramètres cibles approximé pour obtenir des paramètres cible estimés affinés d'une première source ;
   calcul (M7) d'un signal résiduel actualisé par une projection orthogonale du signal de réception à impulsion unique reçu sur l'espace résiduel défini par les sources autres que la première source ; et
   répétition (M8) des étapes de détermination (M4), d'approximation (M5), d'exécution (M6) de l'algorithme d'estimation monopulse et de calcul (M7) pour obtenir des paramètres cibles estimés affinés d'une deuxième source.

2. Procédé (M) selon la revendication 1, dans lequel le calcul (M7) du signal résiduel actualisé tient compte du maximum de signal local à la position des paramètres cibles estimés.

3. Procédé (M) selon la revendication 1, dans lequel le calcul (M7) du signal résiduel actualisé tient compte du maximum de signal local à la position des paramètres cibles estimés affinés.

4. Procédé (M) selon l'une des revendications 1 à 3, dans lequel l'algorithme d'estimation monopulse comprend une comparaison d'amplitude de canaux différentiels ou une méthode d'interférométrie de phase.

5. Procédé (M) selon l'une des revendications 1 à 4, dans lequel le réseau de paramètres cibles (G) est un réseau obtenu par transformation de Fourier discrète suréchantillonnée une ou plusieurs fois.

6. Procédé (M) selon l'une des revendications 1 à 5, dans lequel les paramètres cibles estimés comprennent l'azimut et l'élévation.

7. Procédé (M) selon l'une des revendications 1 à 6, dans lequel l'antenne réseau radar (1) présente une pluralité d'antennes individuelles disposées selon une matrice uniforme.

8. Radar (100) comprenant :

   une antenne réseau radar bidimensionnelle (1) présentant une pluralité d'antennes individuelles disposées selon une matrice uniforme ; et
   un dispositif de traitement de signal radar (3) couplé à l'antenne réseau radar bidimensionnelle (1) et conçu pour mettre en œuvre le procédé selon l'une des revendications 1 à 7 pour la localisation de sources radar.

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 103064071 A

- CN 104182753 A

**In der Beschreibung aufgeführte Nicht-Patentliteratur**

- **CATTENOZ, M. ; SAVY, L. ; MARCOS, S.** Extended orthogonal matching pursuit for robust and fast target localisation in multiple-input multiple-output radar. *IET Radar, Sonar & Navigation,* 2017, vol. 11 (11), 1709